# EUROPEAN PATENT APPLICATION

(11) **EP 1 408 264 A1**
(43) Date of publication of application: **14.04.2004**
(21) Application number: 03022678.1
(22) Date of filing: 07.10.2003
(51) Int. Cl.: F16K 43/00

(54) **Timed faucet allowing adjustment of the delivered water flow-rate**

(30) Priority: 10.10.2002 IT MI20020463 U
(71) Applicant: Valpra by Rossi S.r.l., 28010 Fontaneto D'Agogna (Novara) (IT)
(72) Inventor: Rossi, Riccardo, 28024 Gozzano, (Prov. of Novara) (IT)
(74) Representative: Modiano, Guido, Dr.-Ing.

(57) **Abstract**

A timed faucet (1) that allows adjustment of the delivered water flow-rate, comprising a faucet body (2) that has a base (3) from which a shank (4) protrudes for fixing to a sanitary plumbing component (5), a duct (7) for feeding water to the faucet being provided in the shank, the faucet further comprising adjustment means (8) that are connected to the fixing shank (4) and can be operated in order to vary the water flow-rate that enters the faucet and accordingly vary the flow-rate delivered by the faucet.

## Description

The present invention relates to a timed faucet that allows adjustment of the delivered water flow-rate.

Timed faucets, i.e., faucets in which water dispensing is interrupted automatically upon a preset time after the beginning of the dispensing action, produced by pressing an activation knob, are known.

These kinds of faucet generally do not allow to adjust the delivered water flow-rate. For this reason, in order to adjust the delivered water flow-rate, adjustment valves or pressure reduction units are commonly used which are arranged along the supply duct or ducts of the faucet in a region that is usually located far from the faucet.

The adoption of these adjustment elements is not devoid of drawbacks.

These adjustment components in fact have a relatively high cost, and adjustment of the delivered water flow-rate is difficult because these adjustment components, being generally installed far from the faucet, do not allow to perform the adjustment while constantly monitoring the water flow-rate being actually delivered by the faucet.

The aim of the present invention is to obviate the drawbacks noted above, by providing a timed faucet that allows to adjust the delivered water flow-rate very simply and rapidly.

Within this aim, an object of the invention is to provide a timed faucet in which the element for adjusting the delivered water flow-rate has a considerably lower cost than the adjustment components currently in use.

Another object of the invention is to provide a timed faucet in which it is possible to adjust the delivered water flow-rate while visually monitoring the delivery of the water during adjustment.

Another object of the invention is to provide a timed faucet in which the element for adjusting the delivered water flow-rate does not increase substantially the complexity of the operations for installing the faucet.

This aim and these and others objects that will become better apparent hereinafter are achieved by a timed faucet, comprising a faucet body that has a base from which a shank protrudes for fixing to a sanitary plumbing component in which a duct for feeding water to the faucet is provided, characterized in that it comprises adjustment means that are connected to said fixing shank and can be operated in order to vary the water flow-rate that enters the faucet.

Further characteristics and advantages of the invention will become better apparent from the detailed description of a timed faucet according to the invention, illustrated by way of non-limitative example in the accompanying drawings, wherein:
Figure 1 is a partially sectional view of a portion of the faucet according to the invention, illustrating the adjustment means in the maximum delivery flow-rate condition;
Figure 2 is a partially sectional view of a portion of the faucet according to the invention, taken similarly to Figure 1, with the adjustment means in the position that corresponds to the minimum delivery flow-rate;
Figure 3 is an exploded perspective view of a portion of the faucet according to the invention, illustrating the adjustment means;
Figure 4 is a sectional view of a portion of the faucet according to the invention, illustrating a different method of application of the adjustment means.

With reference to the figures, the timed faucet according to the invention, generally designated by the reference numeral 1 and shown only partially for the sake of simplicity, comprises a faucet body 2 provided with a base 3 from which a shank 4 protrudes in a per se known manner, said shank being adapted to be used to fix the faucet to a sanitary plumbing component 5.

It should be noted that the sanitary plumbing component 5 can be constituted by a washbasin or by a simple support for providing a drinking fountain or the like or by any other sanitary plumbing component that can be fitted with a timed faucet.

The shank 4 preferably has a threaded side wall that can be engaged by a fixing ring 6 to be used in order to fix the body of the faucet 2 to the sanitary plumbing component 5.

Inside the fixing shank 4 there is a supply duct 7 that can be connected to the water distribution system in a per se known manner.

According to the invention, the faucet comprises adjustment means, generally designated by the reference numeral 8, which are connected to the fixing shank 4 and can be operated in order to vary the flow-rate of the water that enters the faucet.

Preferably, the adjustment means 8 comprise a throttling valve, which is supported by the fixing shank 4 and is adapted to choke at least partially the water supply duct 7 formed in the fixing shank 4.

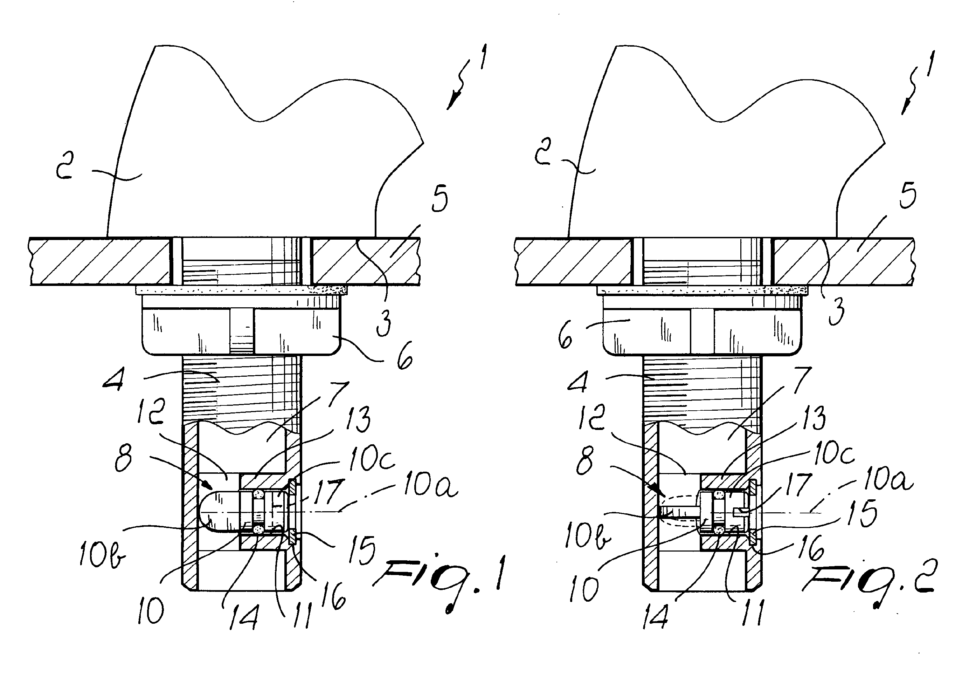

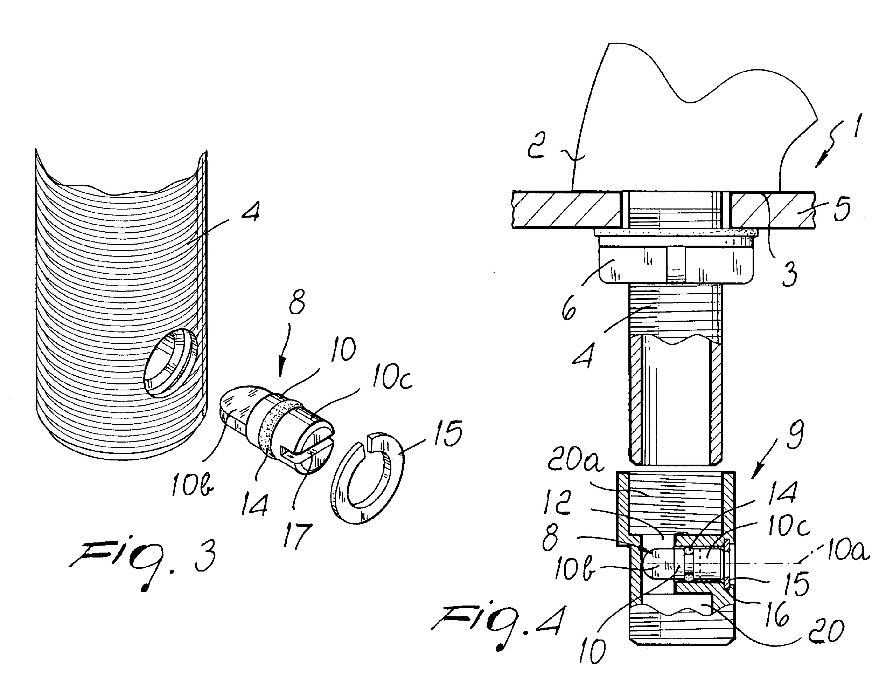

The adjustment means 8 can be supported directly by the fixing shank 4, as shown in Figures 1 to 3, or can be supported by a sleeve 9 that is associable with the end of the fixing shank 4 that lies opposite the base 3 of the body of the faucet 2, as shown in Figure 4.

With particular reference to Figures 1 to 3, the throttling valve, which constitutes the adjustment means 8, comprises a flow control element 10 of the butterfly type, which is rotatable about an axis 10a that is substantially perpendicular to the axis of the supply duct 7. The butterfly-type flow control element 10 is supported, so that it can rotate about its own axis 10a, by a substantially cylindrical seat 11 that is formed in the fixing shank 4 transversely to the axis of the supply duct 7. The butterfly-type flow control element 10 has a wing-shaped portion 10b that protrudes into the supply duct 7.

More particularly, the butterfly-type flow control element has a first substantially cylindrical portion 10c, which is accommodated so that it can rotate about its own axis, which coincides with the axis 10a, in the correspondingly cylindrical seat 11, and a second portion, which is constituted by the wing-shaped portion 10b.

The wing-shaped portion 10b of the butterfly-type flow control element 10 is arranged at a hole 12, whose axis is parallel to the axis of the supply duct 7 and passes through a diaphragm 13 located inside the supply duct 7.

Substantially, the diaphragm 13 is provided during formation of the fixing shank 4 and is then perforated in order to form the hole 12 and the seat 11 for the butterfly-type flow control element 10.

Conveniently, sealing means, which can be constituted for example by a gasket 14 of the O-ring type, are interposed between the first portion 10c of the butterfly-type flow control element and the seat 11.

Means are further provided for retaining the butterfly-type flow control element 10 inside the seat 11 so as to avoid accidental extraction of the butterfly-type flow control element 10 from the seat 11. Such retention means can be constituted, as shown, by an elastic ring 15, which is interposed between the first portion 10c of the butterfly-type flow control element 10 and the seat 11. Preferably, the elastic ring 15 is engaged with a seat 16, which is formed proximate to the end of the seat 11 that is directed toward the outside of the fixing shank 4.

It should be noted that the butterfly-type flow control element 10 is fully accommodated within the fixing shank 4, so that said fixing shank 4 is free from protrusions at the inlet of the seat 11 in order to allow to screw the ring 6 without problems along the fixing shank 4.

If the butterfly-type flow control element 10 is supported by a sleeve 9, as shown in Figure 4, the seat 11 that receives the butterfly-type flow control element 10 is formed within a diaphragm 13 which, instead of being provided in the fixing shank 4, is provided inside the sleeve 9. The diaphragm 13 is provided with a hole 12, at which there is the wing-like portion 10b of the butterfly-type flow control element 10, and the seat 11 is formed in the diaphragm 12 transversely to the axis of the auxiliary duct 20 formed inside the sleeve 9.

The butterfly-type flow control element 10 shown in Figure 4 is provided substantially like the flow control element described with reference to Figures 1 to 3, and for this reason the same reference numerals used in the preceding figures have been retained in Figure 4. Even if the butterfly-type flow control element 10 is fitted in the sleeve 9, it is possible to provide the gasket 14 and the elastic ring 15 in order to retain the butterfly-type flow control element 10 in the seat 11, as already described with reference to Figures 1 to 3.

The sleeve 9 has an axial end in which an internally threaded seat 20a is formed coaxially; such seat can be coupled to an axial end of the fixing shank 4 so that the additional duct 20, which passes through the sleeve 9, constitutes an extension of the supply duct 7 formed in the shank 4 for fixing the faucet.

If the butterfly-type flow control element is supported by the sleeve 9, the sleeve 9 can be associated with the fixing shank 4 after applying the faucet to the sanitary plumbing component.

The butterfly-type flow control element 10 has, on its end directed toward the inlet of the seat 11, a contoured actuation portion 17, which can be simply constituted by a slot that can be engaged by means of a screwdriver or by a contoured recess, for example a hexagonal socket that can be operated by means of an Allen wrench or has a particular shape so that it is operated exclusively with an appropriately provided tool.

The operation of the timed faucet, as regards adjustment of delivered water flow-rate, is evident from what has been described and illustrated. In particular, it is evident that by rotating the butterfly-type flow control element 10 about the axis 10a it is possible to vary the water passage section of the hole 12 and it is therefore possible to vary the flow-rate that enters the faucet, correspondingly varying the delivered water flow-rate.

It should be noted that adjustment of the delivered water flow-rate, performed by acting on the butterfly-type flow control element 10, is very easy, since it can be performed while directly monitoring the delivery of water by the faucet.

It should also be noted that in the faucet according to the invention the delivered water flow-rate is adjusted by way of elements that are simple to manufacture and assemble and have distinctly lower manufacturing costs than those required by the adjustment valves and pressure reduction units that are currently used for this purpose and are installed on the supply duct or ducts of timed faucets.

In practice it has been found that the timed faucet according to the invention fully achieves the intended aim, since it allows to adjust the delivered water flow-rate with components that are extremely economical and simple to assemble and do not increase the complexity of the installation of the faucet.

In practice, the materials used, as well as the dimensions, may be any according to requirements and to the state of the art.

The disclosures in Italian Utility Model Application No. MI2002U000463 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A timed faucet (1), comprising a faucet body (2) that has a base (3) from which a shank (4) protrudes for fixing to a sanitary plumbing component (5) in which a duct (7) for feeding water to the faucet is provided, **characterized in that** it comprises adjustment means (8) that are connected to said fixing shank (4) and can be operated in order to vary the water flow-rate that enters the faucet.

2. The faucet according to claim 1, **characterized in that** said adjustment means (2) comprise a throttling valve that is supported by said fixing shank (4) and is adapted to close at least partially said water supply duct (7) formed in said fixing shank.

3. The faucet according to claims 1 and 2, **characterized in that** said adjustment means (8) comprise a throttling valve that is supported by a sleeve (9) that is associable with said fixing shank (4) and in which an additional duct is formed which constitutes an extension of said water supply duct, said throttling valve being adapted to close at least partially said additional duct formed in said sleeve.

4. The faucet according to one or more of the preceding claims, **characterized in that** said throttling valve comprises a butterfly-type flow control element (10) that is rotatable about an axis (10a) and is supported so that it can rotate about said axis by a substantially cylindrical seat (11) formed in said fixing shank (4) or in said sleeve (9) transversely to the axis of said water supply duct or to said additional duct, said butterfly-type flow control element (10) being provided with a wing-shaped portion (10b) that protrudes into said supply duct or into said additional duct.

5. The faucet according to one or more of the preceding claims, **characterized in that** said butterfly-type flow control element (10) has a first substantially cylindrical portion (10c), which is accommodated so that it can rotate about its own axis in said seat (11), which has a correspondingly cylindrical shape, and a second portion, which is constituted by said wing-shaped portion (10b).

6. The faucet according to one or more of the preceding claims, **characterized in that** said wing-shaped portion (10b) of the butterfly-type flow control element (10) is arranged at a hole (12) whose axis is parallel to the axis of said supply duct (7) or said additional duct, said hole passing through an internal diaphragm (13) of said water supply duct (7) or of said additional duct.

7. The faucet according to one or more of the preceding claims, **characterized in that** said seat (11) is arranged inside said diaphragm (13).

8. The faucet according to one or more of the preceding claims, **characterized in that** sealing means (14) are interposed between said first portion (10c) of the butterfly-type flow control element (10) and said seat (11).

9. The faucet according to one or more of the preceding claims, **characterized in that** it comprises means (15) for retaining said flow control element in said seat.

10. The faucet according to one or more of the preceding claims, **characterized in that** said retention means (15) comprise an elastic ring that is interposed between said seat (11) and said first portion (10c) of the butterfly-type flow control element (10).

11. The faucet according to one or more of the preceding claims, **characterized in that** said fixing shank (4) is threaded externally and **in that** it has no external protrusions at the inlet of said seat.

12. The faucet according to one or more of the preceding claims, **characterized in that** said fixing shank (4) is threaded externally and **in that** said sleeve (9) has an axial end in which an internally threaded seat is formed coaxially, said seat being associable with an axial end of said fixing shank.

13. The faucet according to one or more of the preceding claims, **characterized in that** said flow control element (10) has a contoured actuation portion on its end directed toward the inlet of said seat.
